# EUROPEAN PATENT SPECIFICATION

(11) **EP 2 218 299 B1**
(45) Date of publication and mention of the grant of the patent: **05.08.2015**
(21) Application number: 08859492.4
(22) Date of filing: 12.11.2008
(51) Int. Cl.: H04W 88/06, G06F 9/30

(54) **RADIO ACCESS TECHNOLOGY**
FUNKZUGANGSTECHNOLOGIE
TECHNIQUE D'ACCÈS RADIO

(30) Priority: 13.12.2007 GB 0724337
(43) Date of publication of application: 18.08.2010
(73) Proprietor: NVIDIA Technology UK Limited, London EC4A 3AE (GB)
(72) Inventor: FELLOWS, Simon, Marlborough, Wiltshire SN8 1A (GB); HUCKETT, Simon, Westbury-on-Trym, Bristol BS9 3DL (GB); DA COSTA, Godfrey, Clifton, Bristol BS8 2JN (GB)
(74) Representative: Driver, Virginia Rozanne
(86) International application number: PCT/EP2008/065420
(87) International publication number: WO 2009/074420

(56) References cited:
- EP-A- 1 729 463
- WO-A-03/021426
- WO-A-03/065654

## Description

### Field of the Invention

The present invention relates to instructions sets for performing operations handling communications over a wireless cellular network.

### Background

In the field of wireless cellular communications, there has been increasing interest in recent years in the idea of moving more of the signal processing operations and other related operations of the transceiver into software. A transceiver with a tendency towards software implementation is sometimes referred to as a software modem, or "soft modem". The principle behind software modem is to perform a significant portion of the operations required for the wireless communications in a generic, programmable, reconfigurable processor, rather than in dedicated hardware.

An advantage of a soft modem type system is that it can be programmed and potentially reprogrammed to handle different radio access technologies (RATs). Conventionally, different radio access technologies would require different dedicated hardware to be included on a phone or other wireless terminal, and a "multimode" terminal adapted to handle multiple radio access technologies would have to include different sets of dedicated hardware. This problem is solved by software modem techniques, in which the differences in communicating according to different radio access technologies can be handled in software. For example, the processor could be programmed to handle both 2G and 3G cellular standards, including for example perhaps one or more of the GSM, UMTS, EDGE, High Speed Downlink Packet Access (HSDPA), and High Speed Uplink Packet Access (HSUPA), and 3GPP Long Term Evolution (LTE) standards.

WO 03/065654 describes a wireless network driver software architecture which allows client devices to efficiently switch from one wireless standard to another, while still being able to stay connected and reachable to the Internet or other IP-based networks even when switching between the wireless communication standards. This is achieved by the use of lower layer driver modules called logical link control translators which can be loaded into the multi-standard wireless adaptation layer. However, the capacity of conventional processors to handle multiple radio access technologies is limited, particularly in lower-cost processors as typically used in handheld consumer devices such as mobile phones. It would be desirable to find a way of improving the ability of a processor to handle multiple radio access technologies.

### Summary

According to the present invention, an inter-radio-access-technology device as set forth in claim 1, a method of dynamically switching between radio access technologies as set forth in claim 11 and a computer program product as set forth in claim 14 are provided. Embodiments of the invention are claimed in the dependent claim. According to one aspect, there is provided an inter-radio-access-technology device comprising:
an interface for communicating over a wireless cellular network;
first storage means storing code for performing operations handling communications via said interface according to a plurality of different radio access technologies;
a processor arranged to execute said code; and
selection means operable to dynamically switch between said radio access technologies, by selecting code from the first storage means for execution by the processor;
characterised by second storage means storing definitions of a plurality of different instruction sets, each set being configured for performing operations according to a respective one of the radio access technologies;
in that the processor is operable to execute code in a manner defined by any selected one of said instruction sets by reference to said second storage means;
and in that the selection means is operable to select a corresponding instruction set from the second storage means for executing the selected code in a manner defined by the corresponding instruction set.

dependence on the operation being performed.

The processor may be arranged to generate a plurality of requests for scheduling of said operations, each request having an associated priority level and requested radio access technology, and the scheduling code may be configured to select the radio access technology in dependence on said priority levels requested radio access technologies.

The selection means may be arranged to select the radio access technology in dependence on one or more characteristics of an external environment in which the device operates. Said one ore more characteristics may comprise at least an availability of cells supporting said radio access technologies. Said one or more characteristics may comprise at least an estimate of a channel condition of a wireless channel over which said data is communicated.

The selection means may be arranged to select the radio access technology in dependence on one or more performance requirements.

The selection means may be arranged to selected the radio access technology in dependence on the available processing resources of said processor.

The selection means may be arranged to select the required radio access technology in dependence on a selection by a user of the device.

The processor may be further configured to execute code using a common instruction set common to said plurality of radio access technologies.

According to another aspect, there is provided method of dynamically switching between radio access technologies in a processor, the method comprising: selecting a first instruction set corresponding to the first radio to perform operations handling communications over a wireless cellular network according to the first radio access technology; switching to a second radio access technology; selecting a second instruction set corresponding to the second radio access technology; and executing code on said processor using said second instruction set, to perform operations handling communications over a wireless cellular network according to the second radio access technology.

According to another aspect, there is provided a computer program product for dynamically switching between radio access technologies, the program comprising code which when executed by a processor performs the steps of: selecting a first instruction set corresponding to the first radio access technology; executing code using said first instruction set, to perform operations handling communications over a wireless cellular network according to the first radio access technology; switching to a second radio access technology; selecting a second instruction set corresponding to the second radio access technology; and executing code using said second instruction set, to perform operations handling communications over a wireless cellular network according to the second radio access technology.

According to another aspect, there is provided an inter-radio-access-technology device comprising: an interface for communicating over a wireless cellular network; and a processor arranged to execute code for performing operations handling communications via said interface according to a plurality of different radio access technologies, the processor being operable to execute code using any selected one of a plurality of different instruction sets, each set being configured for performing operations according to a respective one of the radio access technologies; wherein the device is operable to dynamically switch between said radio access technologies, by selecting corresponding code for execution by the processor and selecting the corresponding instruction set for use in execution of the selected code.

### Brief Description of the Drawings

For a better understanding of the present invention and to show it may be carried into effect, reference will now be made by way of example to the accompanying drawings.
Figure 1 is a schematic block diagram of a communication device,
Figure 2 is a schematic block diagram of an execution unit,
Figure 3 is a schematic block diagram of an execution unit with variable instruction sets, and
Figure 4 is a schematic block diagram of an alternative arrangement of instruction sets.

### Detailed Description

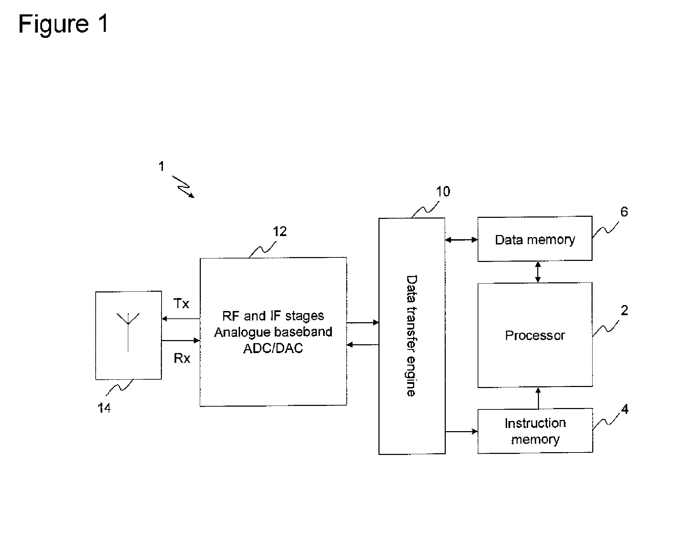

Figure 1 is a schematic block diagram of a device 1 for transmitting and receiving signals in a wireless communication system. Such a device can be realised in a number of different ways, but in the example of Figure 1 a transceiver in the form of an analogue interface 12 comprising radio frequency (RF) and intermediate frequency (IF) stages is arranged to receive and transmit wireless signals (Rx and Tx) via one or more antennas 14. The analogue interface 12 includes components for processing the received analogue radio signals Rx and providing digital signal samples r(k). This can be achieved in different ways which are known in the art.

The analogue interface 12 is arranged to supply the samples r(k) to a data transfer engine 10, which is arranged to communicate with a processor 2, an instruction memory 4 and a data memory 6. The processor 2 is responsible for processing the samples r(k). The processor can execute a number of different operations which are held in the instruction memory 4 in the form of code sequences.

The device 1 may be referred to as a software modem, or soft modem. Preferably, the software modem is a soft baseband modem. That is, on the receive side, all the radio functionality from receiving RF signals from the antenna up to and including mixing down to baseband is implemented in dedicated hardware. Similarly, on the transmit side, all the functionality from mixing up from baseband to outputting RF signals to the antenna is implemented in dedicated hardware. However, all operations in the baseband domain are implemented in software stored on the memory 4 and executed by the processor 2. While this is a preferred implementation, solutions where the RF/IF stage is not implemented by dedicated hardware are also envisaged.

In a preferred embodiment, the dedicated hardware in the receive part of the RF/IF stages in the analogue interface 12 may comprise a low noise amplifier (LNA), mixers for downconversion of the received RF signals to IF and for downconversion from IF to baseband, RF and IF filter stages, and an analogue to digital conversion (ADC) stage. An ADC is provided on each of in-phase and quadrature baseband branches for each of a plurality of receive diversity branches. The dedicated hardware in the transmit part of the RF/IF stages in interface 12 may comprise a digital to analogue conversion (DAC stage, mixers for upconversion of the baseband signals to IF and for upconversion from IF to RF, RF and IF filter stages, and a power amplifier (PA). Details of the required hardware for performing such basic radio functions will be known to a person skilled in the art. Some, all or none of the components of the analogue interface 12 may be implemented in the same chip or housing as the processor 2.

The software may then perform a plurality of different operations such as:
- Modulation and demodulation,
- Interleaving and deinterleaving,
- Rate matching and dematching,
- Modulation and demodulation,
- Channel estimation,
- Equalisation,
- Rake processing,
- Bit log-likelihood ratio (LLR) calculation,
- Transmit diversity processing- Receive diversity processing,
- Multiple transmit and receive antenna (MIMO) processing,
- Voice codecs,
- Link adaptation through power control or adaptive modulation and coding, and
- Cell measurements.

The details of some or all of such operations will differ depending on which radio access technology (RAT) is being used.

In a preferred embodiment, the chip used to implement the device is manufactured by Icera and sold under the trade name Livanto®. Such a chip has a specialised processor platform described for example in WO2006/117562.

The device is configured as an inter-radio-access-technology (inter-RAT) device. That is, firstly, the program memory 4 contains different portions of code for performing signal processing operations and other related operations according to a plurality of different radio access technologies, i.e. different communication standards. And secondly, the device is configured to switch dynamically between the different RATs during operation depending one or more of certain factors, examples of which are discussed below. The radio access technologies supported could for example include one or more of: GSM, UMTS, EDGE, High Speed Downlink Packet Access (HSDPA), and High Speed Uplink Packet Access (HSUPA), and 3GPP Long Term Evolution (LTE) standards.

Preferably, the processor executes scheduling software from the instruction memory 4 for scheduling which RAT to select at any given time. The selection is dynamic in that different RATs can be selected "on the fly" or "ad-hoc" at different times during the ongoing operation of the device.

In a preferred embodiment, the scheduling software may select the RAT based on a priority system whereby different priority levels are allocated to different message queues in which are queued different requests for operations to be performed by the processor. For example, these different priority queues may be a "background" queue, a "multi-frame" queue, a "frame" queue and a "slot" queue. These priority based message queues are used to enable multiple requests for scheduling operations. The slot queue is the highest priority (operations performed every slot), followed by the "frame" queue (operations performed every frame), then followed by "multi-frame" (operations performed less than once per frame), with "background" being the lowest priority (operations performed in the background). Higher priority operations will always pre-empt lower priority operations, even if they are already running. When scheduling requests are made via the queues, the requesting functions specify the RAT that is required or that no specific RAT is required. When an operation is scheduled to run, the scheduler (if required) switches in the required RAT. When the operation has completed, a base RAT may be restored if different from the current RAT. Thus the selection of the RAT can be performed on a per-operation basis.

For example, operations in the "slot" priority category may include the gathering of data samples, operations in the "frame" priority category may include the processing of samples, operations in the "multi-frame" category may include reporting processing results, and operations in the "background" category may include ciphering.

Alternatively or additionally, the scheduling software may select the RAT based on channel conditions. For example, a certain RAT may be selected in low signal-to-noise ratio (SNR) and/or signal-to-interference ratio (SIR) conditions, and/or a certain RAT may be selected in certain multi-path conditions, etc.

Further, the scheduling software may select the RAT based on one or more certain performance requirement, such as a quality target whereby a certain upper limit to the bit-error rate must not be exceeded, with different RATs delivering different performance under different channel conditions.

Further, the scheduling software may select the RAT based on the availability of processing resources. Different RATs will incur different processing costs in different channel conditions, and so for example the cost of each RAT under current conditions may need to be taken into consideration and/or the cost of each RAT may need to be balanced against the processing resources consumed by other concurrent tasks performed by the processor.

Further, the scheduling software may select the RAT based on availability of cells. For example, if no 3G cells are available, then the software may have to select a 2G RAT. This availability could also take into account a cell measurement from nearby cells, e.g. such that if the signal strength from 3G cells is too low then 2G cells would have to be selected.

Further, a user of a mobile terminal (e.g. mobile phone) in which the devices is embodied could also make a selection as to RAT, either to indicate a preference or to force a certain RAT.

By way of example, the following is described in relation to an inter-RAT device for switching between the 2G standard GSM and the 3G standard UMTS, but it will be understood that the principle of the invention can apply to any different RATs.

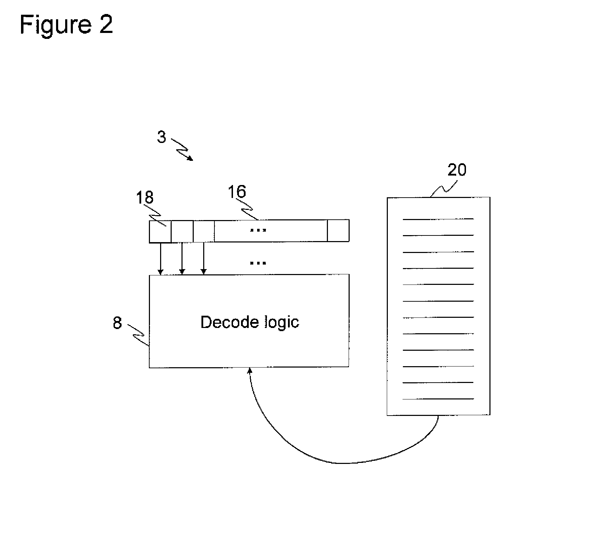

As shown schematically in Figure 2, the processor 2 comprises an execution unit 3 having an instruction buffer 16 and decode logic 8. The instruction buffer 16 comprises a plurality of bits 18 (e.g. sixteen bits), of which those holding the instruction's op-code are connected to the decode logic 20. Further, the decode logic 8 may be arranged to have access to a table 20 of instruction definitions, which may for example be stored in a memory such as data memory 6, instruction memory 4 or in registers on the processor 2 (not shown).

In operation, the processor fetches an instruction word from the instruction memory 4 into the instruction buffer 16 of the execution unit 3. The decode logic 8 reads each bit of the op-code in the instruction buffer 16, and refers to the configuration table 20 to determine how to execute the instruction. That is, the configuration table 20 maps instruction values (op-codes) appearing in the instruction buffer onto actions to be carried by the execution unit 3. Thus the table enables the use of "configurable instructions", whereby a manufacturer can define a set of instructions as appropriate to the application for which the processor is intended. Preferably the instruction set is totally configurable so that all instructions are configured with a configuration table. Nonetheless, the possibility of some basic instructions being hard-coded in addition to the configurable instructions is not excluded.

For the purpose of inter-RAT processing, it is desirable to configure different instructions for performing operations specific to each particular RAT supported, e.g. certain instructions specific to GSM operations and other instructions specific to UMTS operations.

However, the number of entries in the configuration table is limited. This can be problematic for inter-RAT processing because there may be insufficient configurable instructions available to handle all of the desired RATs (or at least to handle them as efficiently as required). For example, there may be insufficient configurable instructions to handle both base-RAT such as GSM and an additional inter-RAT such as UMTS.

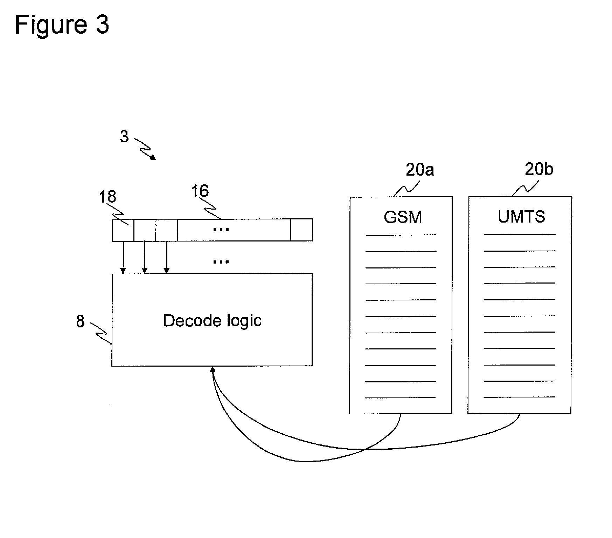

An embodiment of the present invention which overcomes this problem is now described in relation to Figure 3. Here, the decode logic 8 has access to two separate configuration tables 20a and 20b, each comprising a respective set of instruction definitions specifically tailored to a particular corresponding RAT, in this example GSM and UMTS respectively. Again, the tables could be stored in a memory such as data memory 6, instruction memory 4 or in registers on the processor 2 (not shown).

In operation, when the scheduling software running selects a particular RAT, it causes the decode logic 8 to execute code from the instruction memory 4 in a manner as defined in either the first table or the second table 20a or 20b depending on which RAT is selected by the scheduling software. This could be achieved for example by arranging the decode logic to read the table from a predetermined memory location and then configuring the scheduling software to load the different tables into that memory location as required. Or it could be achieved by providing special switching logic in the decode unit, which could for example switch between tables in dependence on a certain value written to a register by the scheduling software, or which could alternatively be controlled by a new dedicated instruction which acts directly on the decode logic 8.

As mentioned, preferably the selection of RAT is on a per-operation basis. So with the multiple instruction set tables 20a and 20b, the device is configured to switch in the corresponding instruction set 20a or 20b depending on the particular operation being performed at the time. But on whatever basis the scheduling software selects the RAT, the device is configured to automatically switch to the appropriate table "ad hoc".

Note, although only two tables 20a and 20b are shown here to define two respective RAT instruction sets, it will be appreciated that any number of tables could potentially be provided to handle any number of RATs.

Without the additional configurable processor instructions, the inter-RAT measurements would have to be executed using sub-optimal code that does not fully exploit the power of the processor 2. Additionally, all the inter-RAT code would have to be duplicated for all supported RATs to perform the same measurement functions as the optimised base-RAT code that can use the configurable instruction set.

However, with the additional configurable instruction table or tables, the following advantages may be achieved.
- It allows any number N of radio access technologies to be supported, each of which can use a dedicated instruction set. This avoids the need to either use sub-optimal code or to create an NxM configuration table where M is the size of the existing table.
- It allows for any number of operation specific configuration tables to be loaded, regardless of the actual RAT used. That is, an operation might have to be performed that is not a 3GPP measurement but, for example, a JPEG compression algorithm, MPEG2 decode, etc.
- It allows configuration tables to be switched in and out dynamically on an operation-by-operation basis, even taking into account scheduling priority of those operations.

The switching between instruction sets is dynamic in that different instruction sets can be selected at different times during the ongoing functioning of the processor 2. If a single table or perhaps an FPGA (field programmable gate array) was used to define instructions, then the instruction set could of course be reconfigured to accommodate different RATs, but this would involve shutting down the device and reprogramming it, which could not be achieved "on the fly". Whereas in the present case, the device can automatically switch between instruction sets as appropriate to the RAT selected for use at any given time, without the need for any such shutting down or reprogramming, and potentially without the need for the user to have any awareness of what is going on.

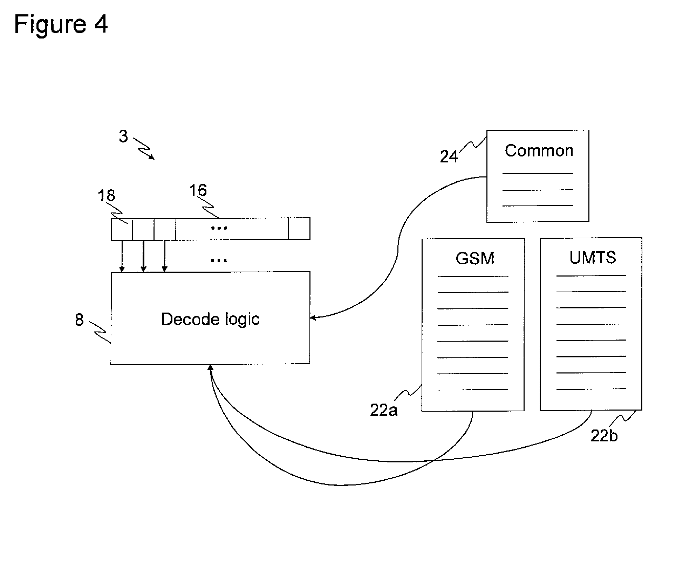

A particularly advantageous embodiment of the invention is now described in relation to Figure 4. In the above example described in relation to Figure 3, each configuration table may in fact need to comprise both RAT-specific instruction definitions and definitions of instructions which are common to both RATs. So in the example of Figure 3, these common instruction definitions are therefore duplicated on both tables, which is an inefficient use of resources.

Therefore in the embodiment of Figure 4, the two tables 20a and 20b are replaced with two smaller RAT-specific configuration tables 22a and 22b (e.g. for GSM and UMTS respectively) and one common RAT configuration table 24. Like the RAT specific tables, the common table 24 is preferably also a configurable set of instruction definitions stored in memory.

The decode logic 8 is then arranged such that it always executes the common instructions using the common definitions, but that it switches between the RAT specific tables 22a and 22b in the manner described above when different RATs are selected by the scheduling software.

The above embodiments have been described by way of example only, and other variations or application of the present invention may be apparent to a person skilled in the art given the disclosures herein. For example, it will be appreciated that any number of different instruction sets could be supported to handle any number of different radio access technologies. Further, although the above has been described in relation to configurable instruction tables, but in a less preferred embodiment the different instruction sets could be implemented by different portions of hardware decode logic. The scope of the invention is not limited by the above description, but only by the following claims.

## Claims

1. An inter-radio-access-technology device (1) comprising:
an interface (12, 14) for communicating over a wireless cellular network;
first storage means (4) storing code for performing operations handling communications via said interface according to a plurality of different radio access technologies;
a processor (2, 3) arranged to execute said code; and
selection means (8) operable to dynamically switch between said radio access technologies, by selecting code from the first storage means for execution by the processor;
**characterised by** second storage means (20a, 20b) storing a plurality of different sets of instruction definitions which map code onto actions to be carried out by the processor (2, 3), each set being configured for performing operations according to a respective one of the radio access technologies;
in that the processor is operable to execute code in a manner defined by any selected one of said sets of instruction definitions by reference to said second storage means;
and in that the selection means is operable to select a corresponding set of instruction definitions from the second storage means for executing the selected code in a manner defined by the corresponding set of instruction definitions, wherein the selection means comprises scheduling code which when executed by the processor (2, 3) controls the dynamic selection of the radio access technology.

2. The device according to claim 1, wherein the scheduling code is configured to select the radio access technology in dependence on the operation being performed.

3. The device according to claim 2, wherein the processor (2, 3) is arranged to generate a plurality of requests for scheduling of said operations, each request having an associated priority level and requested radio access technology, and the scheduling code is configured to select the radio access technology in dependence on said priority levels and requested radio access technologies.

4. The device according to any preceding claim, wherein the selection means is arranged to select the radio access technology in dependence on one or more characteristics of an external environment in which the device operates.

5. The device according to claim 4, wherein said one or more characteristics comprise at least an availability of cells supporting said radio access technologies.

6. The device according to claim 4 or 5, wherein said one or more characteristics comprise at least an estimate of a channel condition of a wireless channel over which said data is communicated.

7. The device according to any preceding claim, wherein the selection means is arranged to select the radio access technology in dependence on one or more performance requirements.

8. The device according to any preceding claim, wherein the selection means is arranged to selected the radio access technology in dependence on the available processing resources of said processor (2, 3).

9. The device according to any preceding claim, wherein the selection means is arranged to select the required radio access technology in dependence on a selection by a user of the device.

10. The device according to any preceding claim, wherein the processor (2, 3) is further configured to execute code using a common set of instruction definitions common to said plurality of radio access technologies.

11. A method of dynamically switching between radio access technologies for a processor (2, 3), the method comprising:
selecting a first set of instruction definitions (20a) corresponding to a first radio access technology, the instruction definitions mapping code onto actions to be carried out by the processor (2, 3);
executing code on the processor (2, 3) in a manner defined by said first set of instruction definitions (20a), to perform operations handling communications over a wireless cellular network according to the first radio access technology;
switching to a second radio access technology;
selecting a second set of instruction definitions (20b) corresponding to the second radio access technology, the instructions definitions mapping code onto actions to be carried out by the processor (2, 3); and
executing code on said processor (2, 3) in a manner defined by said second set of instruction definitions (20b), to perform operations handling communications over a wireless cellular network according to the second radio access technology, wherein the dynamic selection of the radio access technology is controlled by scheduling code executed on the processor (2, 3).

12. The method according to claim 11, comprising selecting the radio access technology in dependence on one or more characteristics of an external environment in which the device operates.

13. The method according to claim 11 or 12, further comprising executing code on said processor (2, 3) using a common set of instruction definitions (24) common to said plurality of radio access technologies.

14. A computer program product for dynamically switching between radio access technologies, the program comprising code which when executed by a processor (2, 3) performs the steps of:
selecting a first set of instruction definitions (20a) corresponding to the first radio access technology, the instruction definitions mapping code onto actions to be carried out by the processor (2, 3);
executing code in a manner defined by said first set of instruction definitions (20a), to perform operations handling communications over a wireless cellular network according to the first radio access technology;
switching to a second radio access technology;
selecting a second set of instruction definitions (20b) corresponding to the second radio access technology; and
executing code in a manner defined by said second set of instruction definitions (20b), to perform operations handling communications over a wireless cellular network according to the second radio access technology, wherein the dynamic selection of the radio access technology is controlled by scheduling code executed on the processor (2, 3).

## Patentansprüche

1. Inter-Funkzugangstechnologie-Gerät (1), das Folgendes umfasst:
eine Schnittstelle (12, 14) zum Kommunizieren über ein drahtloses zelluläres Netzwerk;
erste Speichermittel (4) zum Speichern von Code zum Durchführen von Operationen zum Handhaben von Kommunikationen über die genannte Schnittstelle gemäß mehreren verschiedenen Funkzugangstechnologien;
einen Prozessor (2, 3) zum Ausführen des genannten Code; und
Auswahlmittel (8) zum dynamischen Umschalten zwischen den genannten Funkzugangstechnologien durch Auswählen von Code aus den ersten Speichermitteln zum Ausführen durch den Prozessor;
**gekennzeichnet durch** zweite Steuermittel (20a, 20b), die mehrere verschiedene Sätze von Befehlsdefinitionen speichern, die Code auf Aktionen mappen, die von dem Prozessor (2, 3) ausgeführt werden sollen, wobei jeder Satz zum Durchführen von Operationen gemäß einer jeweiligen einen der Funkzugangstechnologien konfiguriert ist;
**dadurch**, dass der Prozessor Code auf eine Weise ausführt, die von einer beliebigen ausgewählten der genannten Sätze von Befehlsdefinitionen **durch** Bezugnahme auf die genannten zweiten Speichermittel definiert ist;
und **dadurch**, dass das Auswahlmittel einen entsprechenden Satz von Befehlsdefinitionen aus dem zweiten Speichermittel auswählen kann, um den gewählten Code auf eine Weise auszuführen, die **durch** den entsprechenden Satz von Befehlsdefinitionen definiert ist, wobei die Auswahlmittel Scheduling-Code umfassen, der bei Ausführung durch den Prozessor (2, 3) die dynamische Auswahl der Funkzugangstechnologie steuert.

2. Gerät nach Anspruch 1, wobei der Scheduling-Code zum Auswählen der Funkzugangstechnologie in Abhängigkeit von der durchgeführten Operation konfiguriert ist.

3. Gerät nach Anspruch 2, wobei der Prozessor (2, 3) zum Erzeugen von mehreren Anforderungen für das Scheduling der genannten Operationen ausgelegt ist, wobei jede Operation eine assoziierte Prioritätsstufe und angeforderte Funkzugangstechnologie hat und der Scheduling-Code zum Auswählen der Funkzugangstechnologie in Abhängigkeit von den genannten Prioritätsstufen und den angeforderten Funkzugangstechnologien konfiguriert ist.

4. Gerät nach einem vorherigen Anspruch, wobei das Auswahlmittel zum Auswählen der Funkzugangstechnologie in Abhängigkeit von einer oder mehreren Charakteristiken einer externen Umgebung ausgelegt ist, in der das Gerät arbeitet.

5. Gerät nach Anspruch 4, wobei die genannten ein oder mehreren Charakteristiken wenigstens eine Verfügbarkeit von Zellen umfassen, die die genannten Funkzugangstechnologien unterstützen.

6. Gerät nach Anspruch 4 oder 5, wobei die genannten ein oder mehreren Charakteristiken wenigstens eine Schätzung eines Kanalzustands eines drahtlosen Kanals umfassen, über den die genannten Daten übermittelt werden.

7. Gerät nach einem vorherigen Anspruch, wobei das Auswahlmittel zum Auswählen der Funkzugangstechnologie in Abhängigkeit von einer oder mehreren Leistungsanforderungen ausgelegt ist.

8. Gerät nach einem vorherigen Anspruch, wobei das Auswahlmittel zum Auswählen der Funkzugangstechnologie in Abhängigkeit von den verfügbaren Verarbeitungsressourcen des genannten Prozessors (2, 3) ausgelegt ist.

9. Gerät nach einem vorherigen Anspruch, wobei das Auswahlmittel zum Auswählen der benötigten Funkzugangstechnologie in Abhängigkeit von einer Auswahl durch einen Benutzer des Geräts ausgelegt ist.

10. Gerät nach einem vorherigen Anspruch, wobei der Prozessor (2, 3) ferner zum Ausführen von Code mit einem gemeinsamen Satz von Befehlsdefinitionen konfiguriert ist, die den genannten mehreren Funkzugangstechnologien gemeinsam sind.

11. Verfahren zum dynamischen Umschalten zwischen Funkzugangstechnologien für einen Prozessor (2, 3), wobei das Verfahren Folgendes beinhaltet:
Auswählen eines ersten Satzes von Befehlsdefinitionen (20a) entsprechend einer ersten Funkzugangstechnologie, wobei die Befehlsdefinitionen Code auf Aktionen mappen, die von dem Prozessor (2, 3) ausgeführt werden sollen;
Ausführen von Code auf dem Prozessor (2, 3) in einer Weise, die durch den genannten ersten Satz von Befehlsdefinitionen (20a) definiert wird, um Operationen zum Handhaben von Kommunikationen über ein drahtloses zelluläres Netzwerk gemäß der ersten Funkzugangstechnologie durchzuführen;
Umschalten auf eine zweite Funkzugangstechnologie;
Auswählen eines zweiten Satzes von Befehlsdefinitionen (20b) entsprechend der zweiten Funkzugangstechnologie, wobei die Befehlsdefinitionen Code auf Aktionen mappen, die von dem Prozessor (2, 3) ausgeführt werden sollen; und
Ausführen von Code auf dem genannten Prozessor (2, 3) auf eine Weise, die durch den genannten zweiten Satz von Befehlsdefinitionen (20b) definiert wird, zum Durchführen von Operationen zum Handhaben von Kommunikationen über ein drahtloses zelluläres Netzwerk gemäß der zweiten Funkzugangstechnologie, wobei die dynamische Auswahl der Funkzugangstechnologie durch auf dem Prozessor (2, 3) ausgeführten Scheduling-Code gesteuert wird.

12. Verfahren nach Anspruch 11, das das Auswählen der Funkzugangstechnologie in Abhängigkeit von einer oder mehreren Charakteristiken einer externen Umgebung beinhaltet, in der das Gerät arbeitet.

13. Verfahren nach Anspruch 11 oder 12, das ferner das Ausführen von Code auf dem genannten Prozessor (2, 3) unter Verwendung eines gemeinsamen Satzes von Befehlsdefinitionen (24) beinhaltet, die den genannten mehreren Funkzugangstechnologien gemeinsam sind.

14. Computerprogrammprodukt zum dynamischen Umschalten zwischen Funkzugangstechnologien, wobei das Programm Code umfasst, der bei Ausführung durch einen Prozessor (2, 3) die folgenden Schritte ausführt:
Auswählen eines ersten Satzes von Befehlsdefinitionen (20a) entsprechend der ersten Funkzugangstechnologie, wobei die Befehlsdefinitionen Code auf Aktionen mappen, die von dem Prozessor (2, 3) durchgeführt werden sollen;
Ausführen von Code auf eine Weise, die durch den genannten ersten Satz von Befehlsdefinitionen (20a) definiert wird, zum Durchführen von Operationen zum Handhaben von Kommunikationen über ein drahtloses zelluläres Netzwerk gemäß der ersten Funkzugangstechnologie;
Umschalten auf eine zweite Funkzugangstechnologie;
Auswählen eines zweiten Satzes von Befehlsdefinitionen (20b) entsprechend der zweiten Funkzugangstechnologie; und
Ausführen von Code auf eine Weise, die von dem genannten zweiten Satz von Befehlsdefinitionen (20b) definiert wird, zum Durchführen von Operationen zum Handhaben von Kommunikationen über ein drahtloses zelluläres Netzwerk gemäß der zweiten Funkzugangstechnologie, wobei die dynamische Auswahl der Funkzugangstechnologie durch auf dem Prozessor (2, 3) ausgeführten Scheduling-Code gesteuert wird.

## Revendications

1. Dispositif de technologie d'accès inter-radios (1) comportant :
une interface (12, 14) destinée à communiquer sur un réseau cellulaire sans fil ;
un premier moyen de stockage (4) permettant de stocker un code destiné à effectuer des opérations traitant des communications par le biais de ladite interface selon une pluralité de différentes technologies d'accès radio ;
un processeur (2, 3) agencé à des fins d'exécution dudit code ; et
un moyen de sélection (8) servant à commuter de manière dynamique entre lesdites technologies d'accès radio, par la sélection du code en provenance du premier moyen de stockage à des fins d'exécution par le processeur ;
**caractérisé par** un deuxième moyen de stockage (20a, 20b) permettant de stocker une pluralité de différents ensembles de définitions d'instructions qui établissent une correspondance de code sur des actions devant être effectuées par le processeur (2, 3), chaque ensemble étant configuré pour effectuer des opérations selon une technologie d'accès radio respective parmi les technologies d'accès radio ;
**caractérisé en ce que** le processeur sert à exécuter un code selon une manière définie par un ensemble sélectionné quelconque parmi lesdits ensembles de définitions d'instructions en référence audit deuxième moyen de stockage ;
et **en ce que** le moyen de sélection sert à sélectionner un ensemble correspondant de définitions d'instructions en provenance du deuxième moyen de stockage à des fins d'exécution du code sélectionné selon une manière définie par l'ensemble de définitions d'instructions correspondant, dans lequel le moyen de sélection comporte un code d'ordonnancement qui, quand il est exécuté par le processeur (2, 3), commande la sélection dynamique de la technologie d'accès radio.

2. Dispositif selon la revendication 1, dans lequel le code d'ordonnancement est configuré pour sélectionner la technologie d'accès radio en fonction de l'opération effectuée.

3. Dispositif selon la revendication 2, dans lequel le processeur (2, 3) est agencé pour générer une pluralité de demandes à des fins d'ordonnancement desdites opérations, chaque demande ayant un niveau de priorité associé et une technologie d'accès radio demandée, et le code d'ordonnancement est configuré pour sélectionner la technologie d'accès radio en fonction desdits niveaux de priorité et desdites technologies d'accès radio demandées.

4. Dispositif selon l'une quelconque des revendications précédentes, dans lequel le moyen de sélection est agencé pour sélectionner la technologie d'accès radio en fonction d'une ou de plusieurs caractéristiques d'un environnement externe dans lequel le dispositif fonctionne.

5. Dispositif selon la revendication 4, dans lequel lesdites une ou plusieurs caractéristiques comportent au moins une disponibilité de cellules supportant lesdites technologies d'accès radio.

6. Dispositif selon la revendication 4 ou la revendication 5, dans lequel lesdites une ou plusieurs caractéristiques comportent au moins une estimation d'une condition de canal d'un canal sans fil sur lequel lesdites données sont communiquées.

7. Dispositif selon l'une quelconque des revendications précédentes, dans lequel le moyen de sélection est agencé pour sélectionner la technologie d'accès radio en fonction d'une ou de plusieurs exigences de performance.

8. Dispositif selon l'une quelconque des revendications précédentes, dans lequel le moyen de sélection est agencé pour sélectionner la technologie d'accès radio en fonction des ressources de traitement disponibles dudit processeur (2, 3).

9. Dispositif selon l'une quelconque des revendications précédentes, dans lequel le moyen de sélection est agencé pour sélectionner la technologie d'accès radio requise en fonction d'une sélection par un utilisateur du dispositif.

10. Dispositif selon l'une quelconque des revendications précédentes, dans lequel le processeur (2, 3) est par ailleurs configuré pour exécuter un code en utilisant un ensemble commun de définitions d'instructions en commun avec ladite pluralité de technologies d'accès radio.

11. Procédé servant à commuter de manière dynamique entre des technologies d'accès radio pour un processeur (2, 3), le procédé comportant :
l'étape consistant à sélectionner un premier ensemble de définitions d'instructions (20a) correspondant à une première technologie d'accès radio, les définitions d'instructions établissant une correspondance de code sur des actions devant être effectuées par le processeur (2, 3) ;
l'étape consistant à exécuter un code sur le processeur (2, 3) selon une manière définie par ledit premier ensemble de définitions d'instructions (20a), pour effectuer des opérations traitant des communications sur un réseau cellulaire sans fil selon la première technologie d'accès radio ;
l'étape consistant à commuter sur une deuxième technologie d'accès radio ;
l'étape consistant à sélectionner un deuxième ensemble de définitions d'instructions (20b) correspondant à la deuxième technologie d'accès radio, les définitions d'instructions établissant une correspondance de code sur des actions devant être effectuées par le processeur (2, 3) ; et
l'étape consistant à exécuter un code sur ledit processeur (2, 3) selon une manière définie par ledit deuxième ensemble de définitions d'instructions (20b), pour effectuer des opérations traitant des communications sur un réseau cellulaire sans fil selon la deuxième technologie d'accès radio, dans lequel la sélection dynamique de la technologie d'accès radio est commandée par un code d'ordonnancement exécuté sur le processeur (2, 3).

12. Procédé selon la revendication 11, comportant l'étape consistant à sélectionner la technologie d'accès radio en fonction d'une ou de plusieurs caractéristiques d'un environnement externe dans lequel le dispositif fonctionne.

13. Procédé selon la revendication 11 ou la revendication 12, comportant par ailleurs l'étape consistant à exécuter un code sur ledit processeur (2, 3) en utilisant un ensemble commun de définitions d'instructions (24) en commun avec ladite pluralité de technologies d'accès radio.

14. Produit programme informatique servant à commuter de manière dynamique entre des technologies d'accès radio, le programme comportant un code qui, quand il est exécuté par un processeur (2, 3), effectue les étapes consistant à :
sélectionner un premier ensemble de définitions d'instructions (20a) correspondant à la première technologie d'accès radio, les définitions d'instructions établissant une correspondance de code sur des actions devant être effectuées par le processeur (2, 3) ;
exécuter un code selon une manière définie par ledit premier ensemble de définitions d'instructions (20a), pour effectuer des opérations traitant des communications sur un réseau cellulaire sans fil selon la première technologie d'accès radio ;
commuter sur une deuxième technologie d'accès radio ;
sélectionner un deuxième ensemble de définitions d'instructions (20b) correspondant à la deuxième technologie d'accès radio ; et
exécuter un code selon une manière définie par ledit deuxième ensemble de définitions d'instructions (20b), pour effectuer des opérations traitant des communications sur un réseau cellulaire sans fil selon la deuxième technologie d'accès radio, dans lequel la sélection dynamique de la technologie d'accès radio est commandée par un code d'ordonnancement exécuté sur le processeur (2, 3).
